# EUROPÄISCHE PATENTSCHRIFT

(11) **EP 0 600 456 B1**
(45) Veröffentlichungstag und Bekanntmachung des Hinweises auf die Patenterteilung: **24.07.1996**
(21) Anmeldenummer: 93119327.0
(22) Anmeldetag: 01.12.1993
(51) Int. Cl.: B60P 1/00

(54) **Lastfahrzeug**
Commercial vehicle
Véhicule utilitaire

(30) Priorität: 03.12.1992 DE 9216452 U
(43) Veröffentlichungstag der Anmeldung: 08.06.1994
(73) Patentinhaber: Wagner, Ewald, 66606 St. Wendel-Bliesen (DE)
(72) Erfinder: Wagner, Ewald, 66606 St. Wendel-Bliesen (DE)
(74) Vertreter: Bernhardt, Winfrid, Dr.-Ing.

(56) Entgegenhaltungen:
- EP-A- 0 360 235
- US-A- 4 685 856

## Beschreibung

Die Erfindung betrifft ein Lastfahrzeug, insbesondere einen Lastkraftwagen oder Sattelaufleger, mit einem kastenförmigen Aufbau, dessen Vorderwand zwischen den Seitenwänden nach hinten und wieder zurück nach vorne verschiebbar ist mittels vom hinteren Ende und vom vorderen Ende des Aufbaues zu der Vorderwand sich erstreckender Zugstränge, von denen sich zwei Trume entlang der beiden von den Seitenwänden mit dem Ladeboden gebildeten Innenkanten zwischen der Vorderwand und dem hinteren Ende der Ladefläche erstrecken, wobei insbesondere die von der Vorderwand nach hinten sich erstreckenden Zugstränge und die nach vorne sich erstreckenden Zugstränge derart gekoppelt sind, daß sie sich gegenläufig bewegen, insbesondere vereinigt sind zu jeweils einem Zugstrang an jeder Seite, der zwischen dem hinteren Ende bzw. vorderen Ende der Seitenwand, wo seine Enden oben befestigt sind, und der Vorderwand über an dem hinteren Ende bzw. vorderen Ende der Seitenwand und an der Vorderwand angeordnete Umlenkrollen entlang der Seitenwand einmal oder mehrmals parallel hin- und hergeführt ist und an oder nach der letzten Umlenkung an dem vorderen bzw. hinteren Ende des Aufbaues gegenläufig angezogen bzw. nachgelassen ist.

Ein solches Lastfahrzeug ist aus der EP-A-0 360 235 bekannt.

Der Erfindung liegt die Aufgabe zugrunde, Funktionsstörungen der Zugstrangbewegungen möglichst zu vermeiden.

Gemäß der Erfindung ist zu diesem Zweck bei einem Lastfahrzeug der eingangs genannten Art vorgesehen, daß die genannten an den Innenkanten verlaufenden Trume der Zugstränge jeweils in einer Rinne des Ladebodens liegen, die durch ein Band abgedeckt ist, dessen beide Enden an den beiden verschiedenen Seiten der Vorderwand befestigt sind und das am vorderen und am hinteren Ende des Ladebodens unter diesen umgelenkt ist, wo es im übrigen entlanggeführt ist.

Die Anordnung der an den Innenkanten verlaufenden Trume - bei der insbesondere vorgesehenen Führung der Zugstränge derjenigen Trume, die vor der genannten letzten Umlenkung am hinteren Ende des Aufbaues liegen - in den Rinnen und die Abdeckung der Rinnen mit den Bändern schützen die Zugstränge vor dem Ladegut. Ketten als die Zugstränge können sich nicht mehr mit dem Ladegut vollsetzen und dann Störungen an ihrer Umlenkung durch Kettenräder verursachen. Schmutzempfindliche Drahtseile können durchaus eingesetzt werden.

Vorzugsweise sind die Anordnungen so getroffen, daß das Band am hinteren Ende des Ladebodens hinter einer Umlenkrolle mit im wesentlichen senkrechter Achse, die den Zugstrang aus der Rinne in der Waagerechten unter den Ladeboden umlenkt, nach unten umgelenkt ist durch eine Umlenkrolle mit waagerechter Achse oder eine Gleitfläche.
Das Band und der Zugstrang, die in und über den Rinnen zusammen laufen, werden so an der Umlenkung getrennt. Das Band, das sich nicht in seiner Querrichtung biegen läßt, kann in derselben senkrechten Ebene umgelenkt werden und verbleiben. Der Zugstrang weicht nach der Seite aus.

Wenigstens einseitig wird man die Bänder in der Weise abstützen, daß sie mit ihrem einen Rand gleitend auf dem Ladeboden liegen.

Im übrigen kann man sie spannen, vorzugsweise über in ihrer Längsrichtung verlaufende Drahtseilbewehrungen o.ä., die unmittelbar an der Vorderwand befestigt werden können.

Nach Möglichkeit wird man den Bändern aber auch an ihren anderen Rändern eine gleitende Auflage geben, d.h. jeweils auf einem Absatz der Seitenwand.

Die Zeichnungen geben ein Ausführungsbeispiel der Erfindung, jeweils in isometrischer Darstellung, wieder.
- Fig. 1: zeigt schematisch eine in Kombination mit der Erfindung bevorzugte Zugstrangführung,
- Fig. 2: zeigt einen Blick vom hinteren Ende des betreffenden Lastfahrzeuges auf den einen Rand der Ladefläche,
- Fig. 3: zeigt die hintere Ecke der Ladefläche auf der anderen Seite ohne Band und
- Fig. 4: zeigt sie mit Band.

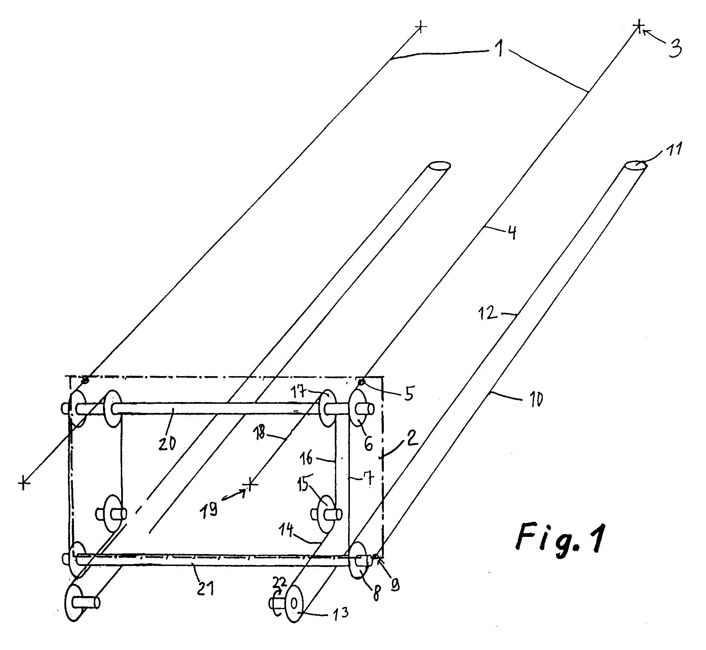

In Fig. 1 sind als Umhüllende der dargestellten parallelen Zugstrang-Trume ein Ladeboden und zwei Seitenwände sowie, in der Zeichnung oben rechts, eine Rückwand eines Lastfahrzeugs zu denken. Eine durch zwei Zugstränge 1 verschiebbare Vorderwand 2 ist strichpunktiert angedeutet.

Die beiden Zugstränge 1 verlaufen jeweils von einem Befestigungspunkt 3 am hinteren Ende der Seitenwand oben mit einem Trum 4 in gleichbleibender Höhe entlang der Seitenwand nach vorne, durchsetzen in einer Ausnehmung 5 die Vorderwand 2, gehen über eine Umlenkrolle 6 in einen senkrechten Trum 7 über, kehren über eine Umlenkrolle 8 nach vorne zurück, durchsetzen die Vorderwand 2 erneut in einer Ausnehmung 9, verlaufen an der Innenkante zwischen Ladefläche und Seitenwand mit einem Trum 10 nach hinten, werden am hinteren Ende der Ladefläche durch eine Umlenkrolle 11 mit senkrechter Achse um 180° umgelenkt, verlaufen mit einem Trum 10 eng unter der Ladefläche zurück und bis zum vorderen Ende des Aufbaues, werden dort durch eine Antriebsrolle 13 nach oben und dann wieder zur Vorderwand 2 hin in einen Trum 14 umgelenkt, gehen an der Vorderseite über eine Umlenkrolle 15 in einen nach oben führenden Trum 16 über und sind dann über eine Umlenkrolle 17 gelegt, hinter der sie mit einem Trum 18 zu ihrem anderen Befestigungspunkt 19 am vorderen Ende des Aufbaues führen.
Die Umlenkrollen 6 und 17 sitzen, zusammen mit denjenigen des anderen Zugstranges, auf einer gemeinsamen Welle 20. Die Umlenkrollen 8 der beiden Zugstränge 1 sitzen auf einer gemeinsamen Welle 21.

Um die Vorderwand 2 aus ihrer dargestellten vorderen Endstellung nach hinten zu verschieben und damit das Ladegut auszudrücken, werden die Antriebsrollen 13 in Pfeilrichtung 22 bewegt. Sie ziehen dann die Trume 12 an und damit die Trume 10 und 4, die einen Flaschenzug bilden mit den Umlenkrollen 6 und 8 als losen Rollen und der Umlenkrolle 11 als fester Rolle. Im gleichen Maße werden die Trume 14 und 18 nachgelassen. Diese ziehen bei umgekehrter Bewegung der Antriebsrollen 13 die Vorderwand 2 wieder nach vorne.

Die beiden Trume 4 liegen an den oberen Rändern der Seitenwände bei nicht randvoller Füllung außerhalb des Ladegutes.

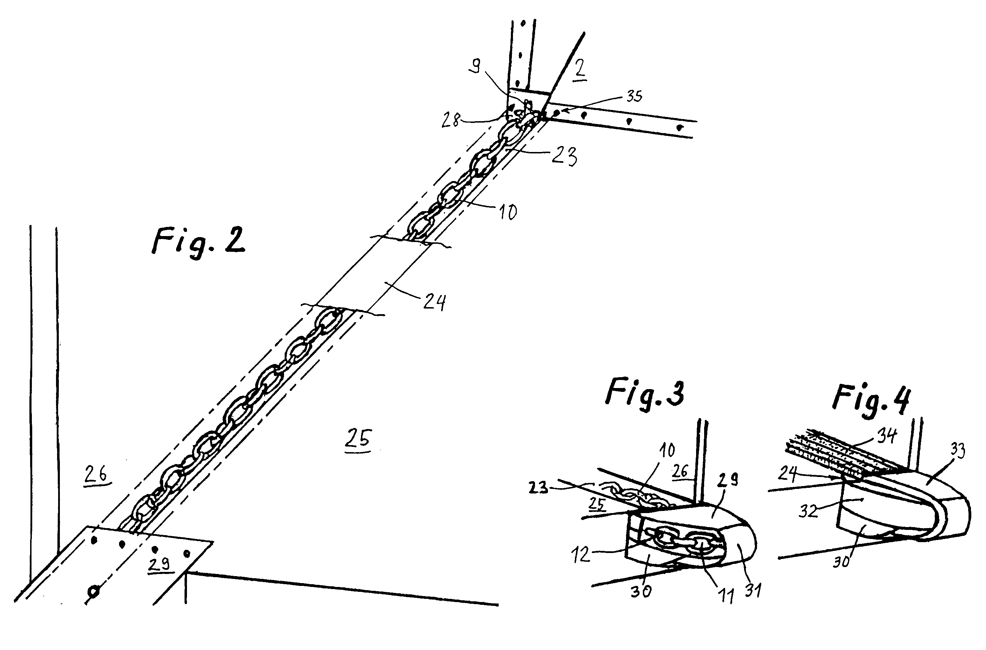

Die Trume 10 sind, wie in Fig. 2 dargestellt, jeweils in eine Rinne 23 verlegt und durch ein Band 24 abgedeckt.
Die in Fig. 2 dargestellte Ladefläche ist mit 25 bezeichnet, die Seitenwand mit 26 und die verschiebbare Vorderwand wiederum mit 2. Diese greift mit einem Vorsprung 28 nach unten, in dem die Ausnehmung 9 angeordnet ist, in die Rinne 23.

Die Umlenkrolle 11 am anderen Ende des Trumes 10 ist in Fig. 2 durch ihre Abdeckung 29 verdeckt, in Fig. 3 an der anderen hinteren Ecke der Ladefläche 25 aber in etwa zu sehen: Sie ist in einer nach hinten abstehenden Konsole 30 angeordnet, auf der die Abdeckung 29 eine gebogene Gleitfläche 31 statt einer Umlenkrolle speziell für das Band 24 bildet. Eine in Fig. 4 gezeichnete seitliche Abdeckung 32 ist in Fig. 3 weggelassen und läßt damit den Blick auch auf den Anfang des Trumes 12 frei.

In Fig. 4 liegt das Band 24 auf der Gleitfläche 31. Es ist in seinem glatten Endabschnitt 33 als Kunststoffband gezeichnet und in dem Abschnitt 34 davor als Flechtband.

Das Band 24 ist mit seinem einen Ende bei 35 an der Vorderwand 2 befestigt, zieht sich nach hinten zu der Umlenkrolle 11, ist dort über die Gleitfläche 31 gelegt und nach unten sowie zurück umgelenkt, verläuft unter der Pritsche zurück bis zu deren vorderem Ende, ist dort durch eine gleiche Gleitfläche 31 wieder nach oben umgelenkt und zu der Vorderwand 2 zurückgeführt, an der es dann in Flucht mit der Befestigung 35 wieder befestigt ist. Um es zu spannen, ist es beispielsweise von mehreren Drahtseilen durchzogen, die unmittelbar an der Vorderwand 2 befestigt sind.
Durch die Spannung ist das Band 24 trotz seiner einseitigen Auflage auf der Ladefläche 25 gehalten.

## Patentansprüche

1. Lastfahrzeug, insbesondere Lastkraftwagen oder Sattelaufleger, mit einem kastenförmigen Aufbau, dessen Vorderwand (2) zwischen den Seitenwänden (26) nach hinten und wieder zurück nach vorne verschiebbar ist mittels vom hinteren Ende und vom vorderen Ende des Aufbaues zu der Vorderwand (2) sich erstreckender Zugstränge (1), von denen sich zwei Trume (10) entlang der beiden von den Seitenwänden (26) mit dem Ladeboden (25) gebildeten Innenkanten zwischen der Vorderwand (2) und dem hinteren Ende der Ladeflache (25) erstrecken, wobei insbesondere die von der Vorderwand (2) nach hinten sich erstreckenden Zugstränge (1) und die nach vorne sich erstreckenden Zugstränge (1) derart gekoppelt sind, daß sie sich gegenläufig bewegen, insbesondere vereinigt sind zu jeweils einem Zugstrang (1) an jeder Seite, der zwischen dem hinteren Ende bzw. vorderen Ende der Seitenwand (26), wo seine Enden oben befestigt sind, und der Vorderwand (2) über an dem hinteren Ende bzw. vorderen Ende der Seitenwand (26) und an der Vorderwand (2) angeordnete Umlenkrollen (6;8;11; 13;15;17) entlang der Seitenwand (26) einmal oder mehrmals parallel hin- und hergeführt ist und an oder nach der letzten Umlenkung (13 bzw. 10) an dem vorderen bzw. hinteren Ende des Aufbaues gegenläufig angezogen bzw. nachgelassen ist,
dadurch gekennzeichnet,
daß die genannten an den Innenkanten verlaufenden Trume (10) der Zugstränge (1) jeweils in einer Rinne (23) des Ladebodens (25) liegen, die durch ein Band (24) abgedeckt ist, dessen beide Enden an den beiden verschiedenen Seiten der Vorderwand (2) befestigt (35) sind und das am vorderen und am hinteren Ende des Ladebodens (25) unter diesen umgelenkt (31) ist, wo es im übrigen entlanggeführt ist.

2. Lastfahrzeug nach Anspruch 1,
dadurch gekennzeichnet,
daß das Band (24) am hinteren Ende des Ladebodens (25) hinter einer Umlenkrolle (11) mit im wesentlichen senkrechter Achse, die den Zugstrang (10) aus der Rinne (23) in der Waagerechten unter den Ladeboden (25) umlenkt, nach unten umgelenkt ist durch eine Umlenkrolle mit waagerechter Achse oder eine Gleitfläche (31).

3. Lastfahrzeug nach Anspruch 1 oder 2,
dadurch gekennzeichnet,
daß das Band (24) mit seinem einen Rand gleitend auf dem Ladeboden (25) liegt.

4. Lastfahrzeug nach Anspruch 3,
dadurch gekennzeichnet,
daß das Band (24) mit seinem anderen Rand gleitend auf einem Absatz der Seitenwand liegt.

5. Lastfahrzeug nach einem der Ansprüche 1 bis 4,
dadurch gekennzeichnet,
daß das Band aus einem Kunststoff mit längs verlaufenden Drahtseilbewehrungen besteht und die Bewehrungen ausgehend von der Vorderwand gespannt sind.

## Claims

1. A commercial vehicle, particularly a lorry or semitrailer, having a box-like container body with a front wall (2) displaceable back and forth between the two side walls (26) by means of pulley lines (1) extending from the rear end and from the front end of the body to the front wall (2), two lengths (10) of which lines (1) extend along the two inner edges formed by the side walls (26) and the floor (25), between the front wall (2) and the rear end of the loading area (25), particularly with the lines (1) extending from the front wall (2) to the rear and the lines (1) extending towards the front being coupled such that they work counter to one another and in particular are united to form one pulley line (1) each on either side, with said line (1) being guided along the side wall (26) in parallel relationship back and forth once or more than once between the rear and/or the front ends of the side wall (26), where the ends of the line are attached at the top, and the front wall (2) via deflecting rollers (6;8;11;13;15;17) mounted to the rear end and to the front end respectively of the side wall (26) and to the front wall (2), and with said line (1) further being pulled or slackened counter to one another at or after the final deflection (13 and/or 10) at the front or rear end of the body respectively,
characterised in that
the given lengths (10) of the pulley lines (1), running along the inner edges, each lie in a groove (23) in the floor (25), the groove being covered by a belt (24) with its two ends attached (35) to the two different sides of the front wall (2), with said belt (24) being turned under the floor (25) at the front and rear ends of said floor (25), along which it is also guided.

2. The commercial vehicle according to claim 1,
characterised in that
the belt (24) is turned downwardly at the rear end of the floor (25) by a deflecting roller with a horizontal axis or by a sliding surface (31) behind a deflecting roller (11) with a substantially vertical axis, that turns the line (10) from the groove (23) horizontally underneath the floor (25).

3. The commercial vehicle according to claim 1 or 2,
characterised in that
the belt (24) lies with its one edge gliding on the floor (25).

4. The commercial vehicle according to claim 3,
characterised in that
the belt (24) lies with its other edge gliding on a shoulder of the side wall.

5. The commercial vehicle according to one of claims 1 to 4,
characterised in that
the belt is made of a plastic material with longitudinally extending cable reinforcements, and the reinforcements are tensed starting from the front wall.

## Revendications

1. Véhicule utilitaire, en particulier poids lourd ou semi-remorque, présentant une construction en forme de caisse, dont la paroi avant (2) peut être déplacée vers l'arrière puis à nouveau vers l'avant entre les parois latérales (26) à l'aide de cordes de traction (1) qui s'étendent de l'extrémité arrière et de l'extrémité avant de la construction vers la paroi avant (2), deux brins (10) des cordes s'étendant le long des deux bords intérieurs formés par les parois latérales (26) avec le fond de chargement (25) entre la paroi avant (2) et l'extrémité arrière de la surface de chargement (25), les cordes de traction (1) s'étendant de la paroi avant (2) vers l'arrière et les cordes de traction (1) s'étendant vers l'avant étant en particulier assemblées de telle manière qu'elles sont animées d'un mouvement opposé, qu'elles sont en particulier assemblées en formant une seule corde de traction (1) de chaque côté, qui est guidée entre l'extrémité arrière ou l'extrémité avant de la paroi latérale (26), où ses extrémités sont fixées sur le dessus, et la paroi avant (2), une fois ou plusieurs fois parallèlement à la paroi latérale (26), via des poulies de déviation (6, 8, 11, 13, 15, 17) disposées au niveau de l'extrémité arrière ou avant de la paroi latérale (26) et de la paroi avant (2) et qui est tirée ou relâchée après la dernière déviation (13 ou 10) en l'extrémité avant ou arrière de la construction, caractérisé en ce que les brins (10) des cordes mentionnés des cordes de traction (1) qui s'étendent le long des bords intérieurs sont chaque fois disposés dans une goulotte (23) du fond de chargement (25) qui est recouverte par une bande (24) dont les deux extrémités sont fixées (35) au deux côtés différents de la paroi avant (2) et qui est déviée (31) en-dessous du fond de chargement (25) en l'extrémité avant et en l'extrémité arrière de celui-ci tout en étant guidée le long dudit fond sur le reste de sa longueur.

2. Véhicule utilitaire selon la revendication 1, caractérisé en ce que la bande (24), en l'extrémité arrière du fond de chargement (25), est déviée vers le bas par une poulie de déviation présentant un axe horizontal ou une surface de glissement (31), derrière une poulie (11) avec un axe essentiellement vertical qui dévie la corde de traction (10) sortant de la goulotte (23) dans la direction horizontale au-dessous du fond (25).

3. Véhicule utilitaire selon la revendication 1 ou 2, caractérisé en ce qu'un bord de la bande (24) est disposée sur le fond (25) de manière à glisser.

4. Véhicule utilitaire selon la revendication 3, caractérisé en ce que l'autre bord de la bande (24) est disposée sur un épaulement de la paroi latérale.

5. Véhicule utilitaire selon une quelconque des revendications 1 à 4, caractérisé en ce que la bande est constituée par une matière synthétique avec des armatures longitudinales en câble métallique et en ce que les armatures sont tendues en partant de la paroi avant.
